# EUROPEAN PATENT SPECIFICATION

(11) **EP 0 486 442 B1**
(45) Date of publication and mention of the grant of the patent: **04.10.1995**
(21) Application number: 91830494.0
(22) Date of filing: 12.11.1991
(51) Int. Cl.: H02G 3/26, F16L 3/22

(54) **A system of modular supports made up of three or more pieces, suitable for receiving ducts of different diameters**
Modulares Halteelementesystem mit drei oder mehr Teilen zur Aufnahme von Kanälen mit unterschiedlichen Durchmessern
Système de supports modulaires composé de 3 ou davantage de pièces, adapté pour recevoir des conduits de diamètres différents

(30) Priority: 13.11.1990 IT 4044890
(43) Date of publication of application: 20.05.1992
(73) Proprietor: TELEPLAST S.r.L., 80121 Napoli (IT)
(72) Inventor: d'Angelo, Fortunato, I-80127 Napoli (IT)
(74) Representative: Cirillo, Gennaro

(56) References cited:
- DE-A- 2 510 828
- FR-A- 2 332 634

## Description

The recent use of optical fiber cables has required in respect to the traditional ducts a choice between different diameters.

Considering the increasing usage of these new cables which more and more substitute the traditional ones, very often even in the installation of the latter it is preferred to also provide the tubings to be used for optical fiber cables to be laid later on.

Therefore, more and more often one resorts to installing double ducts; that is to say to lay next to the traditional ones those to be use for the optical fiber cables.

Ducts prearranged for receiving telephone cables provide a choice of cradle supports realized in several superimposed pieces.

Devices designed to support protection ducts for cables are known; the European Patent n. 303044 proposes over laid elements that have to be firmly fastened to the ground by means of metallic brackets and bolts; furthermore special devices to tighten with a degree of elasticity the modular elements into a frame are required; the overall structure is quite complex and requires troublesome work for its assembly directly into the dug trench.

The French Patent n. 2332634 is also known which illustrates modular moulded elements which can be clamped together by means of sockets into which protruding hooks are fitted to form a bolt. There is only one type of modular component so that as a result the ducts are formed by a one section conduit type; in addition the component elements are quite heavy because of the presence of the strengthening ribs and because the walls are solid.

Also know is the German Patent n. 2510828 proposing a system of modular supports in accordance with the preamble of appended claim 1, the first row of which has to be fastened to the ground by means of bolts after which other elements can be inserted using a complex system of tightening joints.

Both the German and the French patents achieve a light weight by basing the structure of the support member on a web (4) in the German, (2) in the French provided with transverse flanges for strength and to support the cable tubing.

In contrast, the system according to the present invention is characterised in that each support member is formed with wide through apertures in a direction parallel to the direction of the cables to be supported so that there is no web perpendicular to this direction and the support member has substantially the form of a profile.

The solving idea consists in having realized members suitably shaped and endowed with a fixed joint system that allows them to be coupled in such a way that all the necessary configurations can be obtained for supporting either traditional or optical fiber cables, it is also possible to realize the coupling of both type pipelines.

This solving idea is shown in the annexed figures in an embodiment given as a matter of example and not of limitation.

Fig.1 shows the first of the modular members, the one utilized to support the tubings having a greater section, that is to say the ones suitable for containing the traditional cables or a set of three monotubes of a proper diameter for optical fiber cables.

Fig. 2 reports a second member: the one suitable for supporting the tubings having a smaller cross-section that contain the optical fiber cables.

Fig. 3 shows a third member,the one with the function of plugging to close, suitable for being applied to the second member.

Fig. 4 hypothesizes the assembly of a number of pieces to realize the support for a greater cross section tube and for a set of three smaller cross section tubes overlaying the first one.

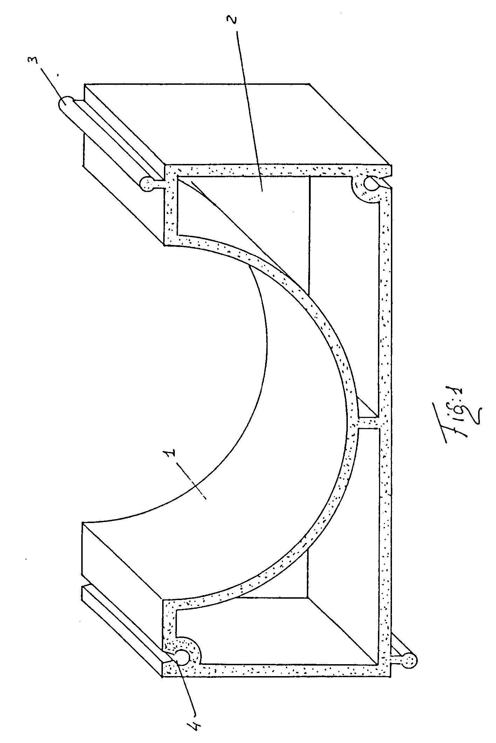

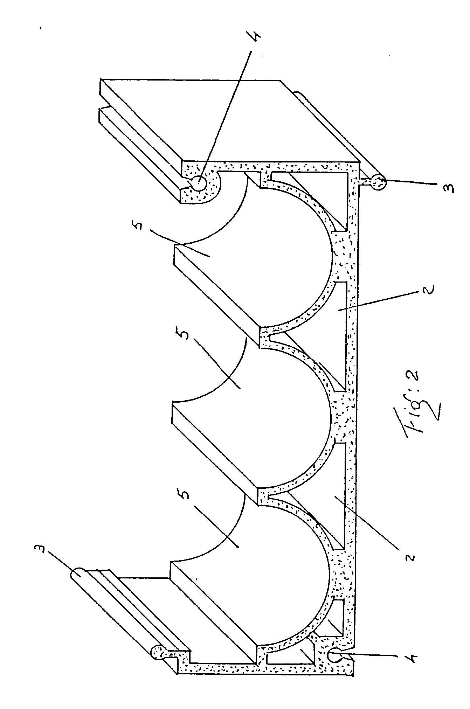

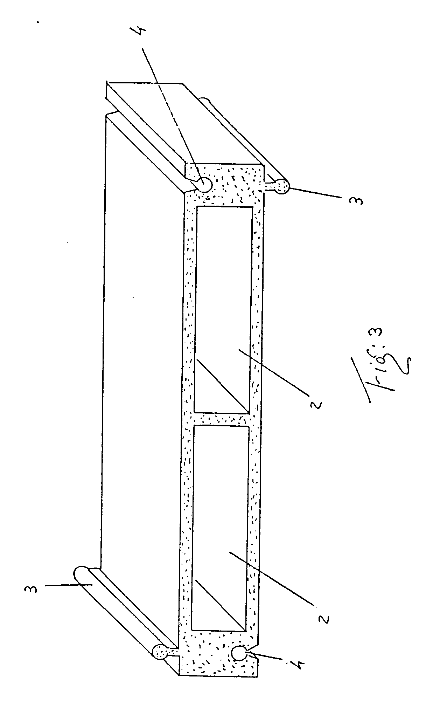

To realize this assembly, two pieces of the type of those depicted in Figure 1, one piece of those depicted in figure 2 and a piece as illustrated in figure 3 have been utilized.

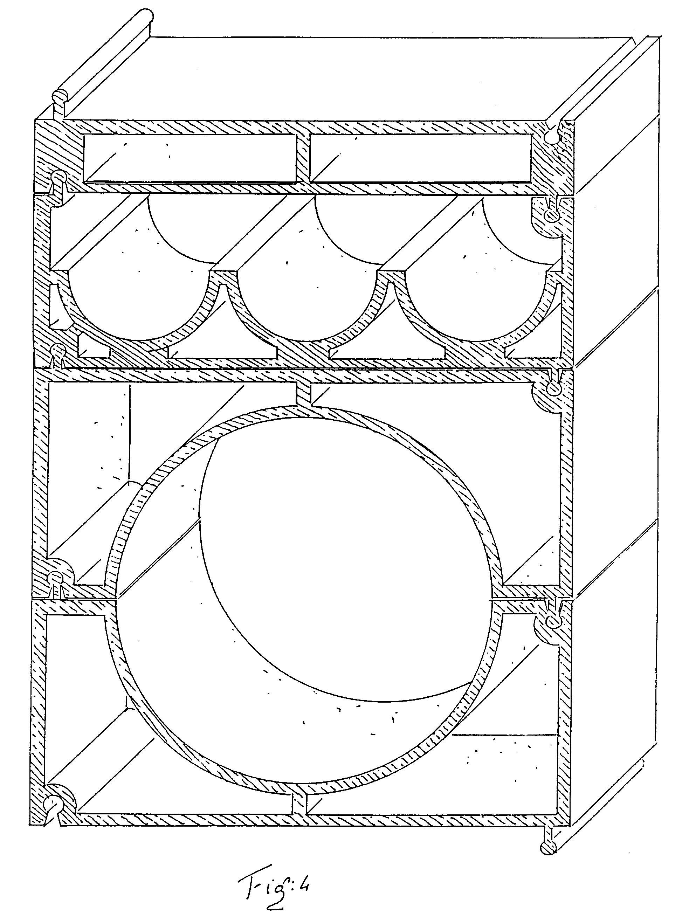

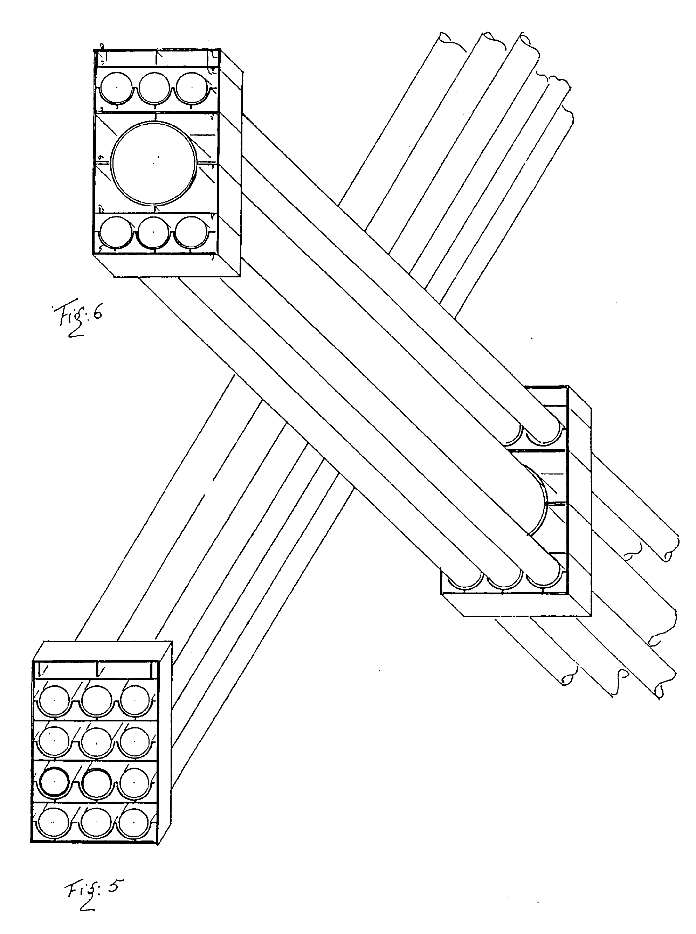

Figure 5 shows a bundle of ducts, realized only with small tubes that utilize four modules of the type depicted in Figure 2, superposed and closed by the plug of figure 3.

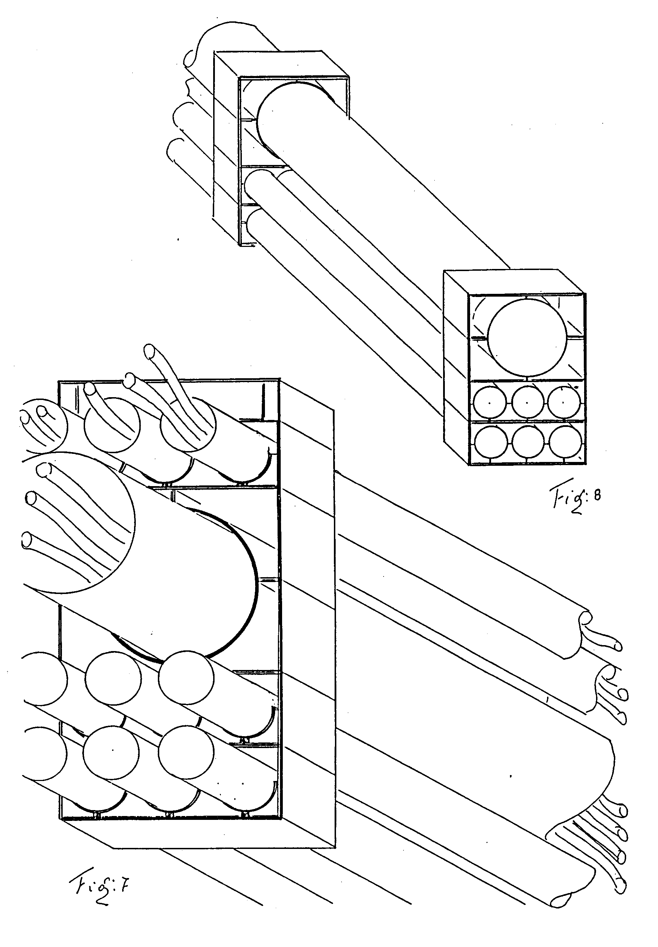

The bundle in Figure 6, on the contrary, hypothesizes a central tube of a large size, closed by two rows of smaller cross section tubes and, lastly, the closing plug.

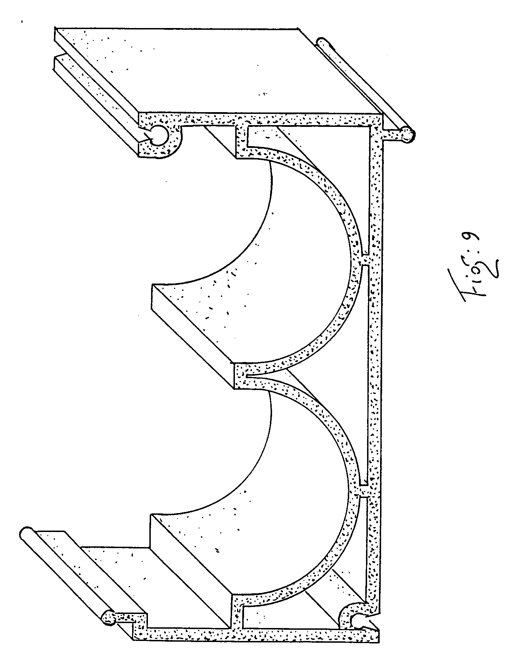

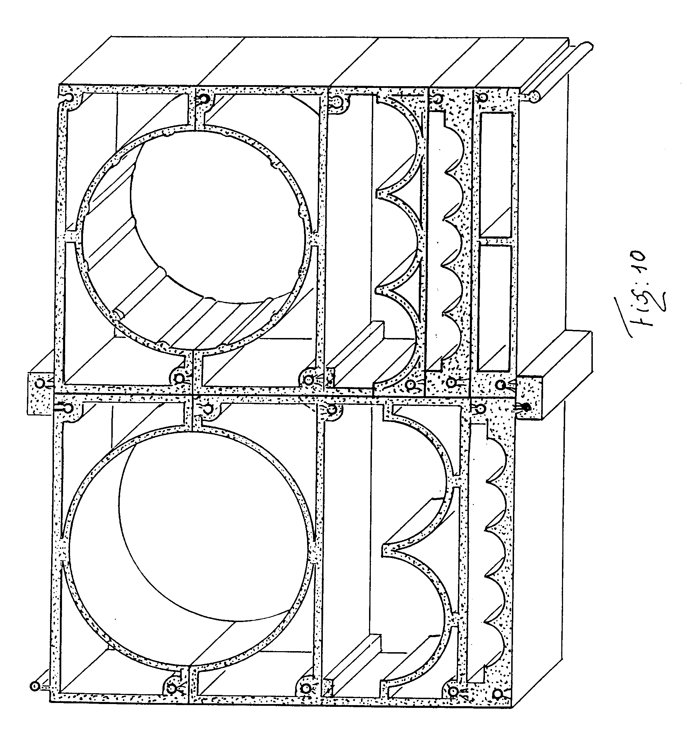

Figures 7,8,9 and 10 report other possible coupling solutions, all obtained with the suggested modules.

With reference to the Figures, therefore, the module 1 of figure 1 has a cradle of semicircular shape 1 supported by an essentially parallelepipedon structure lightened by large openings 2.

The structure presents the shaped projections 3 by a part and the shaped slot 4 by the other, by the major sides for all the length of the minor sides.

These members are interspersed in the sense that to a slot on a face a projection on the opposite face corresponds.

The module of Fig. 2 presents three cradles 5, arranged side by side, made up of semicircles of such a diameter, as to be able to support each one a tubing of the ones utilized to contain the optical fiber cables, in this case also there are the apertures 2.

The width and the length of this module are equal to those of the module of Fig.1, and it presents the same projections and slots to be able to fix itself thereto.

The module of Fig.3 also has cells arranged side by side 2 and is in the shape of a parallelepipedon with both its greater faces closed, the slots 4 and the projections 3 for the reciprocal fixation are equally present, its length and width are identical to those of the two other modules.

It acts also as the closure member for the modules of Fig.2.

The utilization of the suggested modular structure is evident from what has been disclosed and depicted.

By virtue of the modular sizes and of the presence of the slots and of the transverse ridges, they can be combined in many configurations, some of which are illustrated in the annexed figures.

Indeed, it suffices to rest the base member, to install the tube and then to superpose the other member fixing it on the first member to enclose the tubing and have at disposal the base of another support to be superposed, the plug acting module can be usefully utilized as the final closure member.

The suggested modular system affords the advantage of an easy assembly and of a large field of configurations with a reduced number of members.

The series of the pieces affords the possibility of combining different tubings or tubings of the same type, realizing numerous couplings suitable for any exigency, in particular it is possible to realize the coupling of cables of the traditional copper type in the 125 mm tubing and optical fiber cables in the monotubes, or the 125 mm tubing can be utilized as a spare tube for both traditional cables and optical fiber cables.

The system proposed to install ducts for protection of cables is formed by modular elements which as clearly results in the drawings and also in the description of the patent, have an extremely light structure. The joining system is formed by cylindrical protrusions which guarantee the elements connection even if sudden stresses are applied to the structure.

In the annexed figures one has hypothesized for the members of the series a size and a configuration which at the moment respond to the exigencies in the field of the installation of the telephone cables; however the possibility is not excluded of realizing configurations different for both diameters and number of cradles arranged side by side, without departing from the scope of the patent, whereto formal and structural variations can be anyhow made, without departing from its scope, which remains defined by the following claims.

## Claims

1. A system of modular supports suitable for simultaneously supporting cable tubing of different diameters, the system comprising support members (1), each provided with a fixed joint system (3,4) allowing it to be clamped to laterally adjacent members, each support member presenting a shape inscribed in a parallelepipedon and comprising at least one cradle (5) adapted to support tubing of a distinct diameter characterised in that each support member (1) is constructed for light weight with wide through apertures (2) in a direction parallel to the direction of the tubing to be supported, such that there is substantially no web perpendicular to the said direction.

2. The system according to claim 1 wherein the joint system comprises a projection (3) and a slot (4) provided on each of the opposed largest bases of the said parallelepipedon and adapted to clampingly engage a corresponding slot and projection respectively provided on a largest base of an adjacent parallelepipedon.

3. the system according to claim 2 wherein a said projection and slot are provided on each base of the parallelepipedon, the said projections and slots being arranged parallel to the shortest sides of the greatest base of the said parallelepipedon.

4. The system according to any of claims 1 to 3 wherein the support member comprises one or more cradles in the form of circular arcs arranged side by side.

5. The system according to claim 4 wherein the circular arc is a semicircle.

6. The system according to any of claims 1 to 5 further comprising a closure member having a perfectly parallelepipedon shape and adapted to perform exclusively the function of closure plug for the said support members.

## Patentansprüche

1. System von bausteinartigen Trägern zum gleichzeitigen Stützen von Rohrleitungen für kabelartige Gegenstände mit unterschiedlichen Durchmessern, mit Trägerelementen (1), wovon jedes ein festes Verbindungssystem (3, 4) zur Befestigung an benachbarten Elementen aufweist, wobei jedes Trägerelement in einer von einem Parallelepipedon beschriebenen Form vorliegt und mindestens eine Mulde (5) aufweist, die geeignet ist, Rohrleitungen mit bestimmtem Durchmesser zu stützen, **dadurch gekennzeichnet,** daß jedes Trägerelement (1) zum Zweck der Gewichtsreduzierung große durchgehende Öffnungen (2) aufweist, die parallel zu der Richtung vorliegen, in welcher die zu stützenden Rohrleitungen verlaufen, so daß im wesentlichen eine Versteifung im rechten Winkel zu dieser Richtung vermieden wird.

2. System nach Anspruch 1, dadurch gekennzeichnet, daß das Verbindungssystem jeweils einen Vorsprung (3) und eine Vertiefung (4) aufweist, welche auf jeder der gegenüberliegenden größten Grundflächen des Parallelepipedons angeordnet und mit entsprechenden Vertiefungen und Vorsprüngen verrastbar sind, die wiederum jeweils auf einer größten Grundfläche eines benachbarten Parallelepipedons angeordnet sind.

3. System nach Anspruch 2, dadurch gekennzeichnet, daß der Vorsprung und die Vertiefung an jeder der Grundflächen des Parallelepipedons angeordnet sind, wobei die Vorsprünge und Vertiefungen parallel zu den kürzesten Seiten der größten Grundfläche des Parallel- epipedons vorliegen.

4. System nach einem der Ansprüche 1 bis 3, dadurch gekennzeichnet, daß das Trägerelement eine oder mehrere Mulden in Form kreisförmiger, nebeneinanderliegender Bögen aufweist.

5. System nach Anspruch 4, dadurch gekennzeichnet, daß der kreisförmige Bogen als Halbkreis vorliegt.

6. System nach einem der Ansprüche 1 bis 5, dadurch gekennzeichnet, daß außerdem ein Verschlußelement vorgesehen ist, welches exakt in Form eines Parallelepipedons vorliegt und ausschließlich die Funktion hat, als Steckverschluß für die Trägerelemente zu dienen.

## Revendications

1. sistème de supports modulés apte à supporter simultanément tuyaux pour câbles de différents diamètres; le système comprend éléments de supoprt (1), chacun porvu d'un préfixé système de jointure (3), (4), qui permet qu'il soit joint aux éléments adjacents latérals, chaque élément de support présente une forme inscrite dans un parallélepipède et comprend au moins un berceau apte à supporter tuyaux de différents diamètres, carachérisé par le fait que cheque élément de support (1) est formé pour obtenir une structure légère avec de larges ouvertures (2) dans une direction parallèle à la direction des tuyaux qui doivent être supportés de façon que en substance aucune côte ne soit perpendiculare à la direction.

2. Systéme selon la revendication 1) là où le systéme de jointure comprend un élément saillant (3) et une fente (4) sur chacune des larges bases apposées du parallélépipède et apte à employer dans l'accrochage une correspondante mine et projection (élément saillant) respectivement prévus sur la base la plus large d'un parallélépipede adjacent.

3. systéme selon la revendication 2) où une saillie et mine sont présentes sur chaque base du parallélépipède, cette saillie et mine sont disposées parallélement au côté le plus court de la base la plus grande de ce parallélépipède.

4. systéme selon une quelconque des revendications de 1) à 3) où l'élément de support comprend une ou plus cellules en forme d'arcs circulaires disposès l'un à côté de l'autre.

5. système selon la revendication 4) où l'arc circulaire est un demi-cercle.

6. systéme selon un des revendications de 1) à 5) qui comprend ultérieurement un élément de fermeture en forme parfaitement parallélépipede et apte à avoir exclusivement la fonction d'un bouchon de fermeture des éléments de support.
